# EUROPEAN PATENT SPECIFICATION

(11) **EP 4 394 500 B1**
(45) Date of publication and mention of the grant of the patent: **09.12.2026**
(21) Application number: 22861718.9
(22) Date of filing: 24.08.2022
(51) Int. Cl.: H04N 23/51, H04N 23/54, G03B 30/00, G03B 17/12, G03B 17/02, H04N 23/57, G02B 7/02

(54) **CAMERA MODULE**
KAMERAMODUL
MODULE DE CAMÉRA

(30) Priority: 27.08.2021 KR 20210114196
(43) Date of publication of application: 03.07.2024
(73) Proprietor: LG INNOTEK CO., LTD., Seoul 07796 (KR)
(72) Inventor: HWANG, Sun Min, Seoul 07796 (KR)
(74) Representative: M. Zardi & Co S.A.
(86) International application number: PCT/KR2022/012676
(87) International publication number: WO 2023/027510

(56) References cited:
- WO-A1-2017/179943
- JP-A- 2019 511 874
- KR-A- 20100 048 101
- KR-A- 20170 084 550
- KR-A- 20180 026 146
- KR-A- 20190 091 978
- KR-A- 20200 014 504
- KR-A- 20200 055 548

## Description

### [Technical Field]

The present embodiment relates to a camera module. More specifically, the present invention relates to a camera module that minimizes the reduction of component mounting space in a multiple substrate stack structure.

### [Background Art]

In general, since camera modules are manufactured in small sizes and are applied to various IT devices such as camera phones, PDAs, smartphones, and other portable mobile communication devices, in recent years, the release of devices equipped with small camera modules is gradually increasing according to various preferences of consumers.

Recently, due to the advancement and automation of vehicle parts, camera modules for image acquisition are being widely used. For such examples, there are camera modules being used in front and rear surveillance cameras, black boxes, and the like.

In addition, as demands for driver convenience and safety increase in the automobile industry, a variety of new technologies are being applied. In particular, technology using cameras is being actively applied by converging with software technology.

Meanwhile, recently, a structure is being studied in which a plurality of substrates being disposed inside the camera module of vehicle camera is provided for lamination. However, when fixing a plurality of substrates using screws, the area of the substrates where the screws are coupled becomes an unusable area, which causes a problem in that component mounting space is reduced. In addition, there is a problem that the time required for the manufacturing process increases due to the screw fastening operation. In addition, there is a problem in that there is a possibility of substrate bending occurring due to excessive torque when fastening screws.

KR20170084550 A discloses a camera module structure including a lens assembly and a plurality of circuit boards (first, second, third) that are electrically connected via flexible circuit boards. A shielding can is provided to fix and protect the boards. The shielding can includes multiple engaging parts and supporting portions for mechanically securing the circuit boards. The invention emphasizes improved compactness and structural stability of the camera module through layered board arrangement and mechanical fastening via shield cans. KR20190091978 A discloses a vehicle camera comprising a lens holder and a housing, with three printed circuit boards (PCBs) arranged inside. Each PCB is supported by multi-directional elastic hooks and support units integrated into two separate coupling members. The third PCB is movable in the horizontal direction to compensate for manufacturing tolerances, improving alignment between the lens and image sensor. The design improves assembly efficiency and enables flexible alignment without additional fastening components.

### [Detailed Description of the Invention]

### [Technical Subject]

The present embodiment is intended to provide a camera module that minimizes the reduction of component mounting space in a multiple substrate stack structure.

In addition, the present embodiment is intended to provide a camera module that can minimize process time because the process is simplified with a hook fastening structure.

### [Technical Solution]

In order to solve above problems, a camera module according to the present invention comprises: a first body comprising a lens; a second body coupled to the first body; a first substrate to a third substrate disposed between the first body and the second body; and a first support member and a second support member for spacing the first to third substrates in an optical axis direction, wherein the first support member comprises a hole formed in a sidewall thereof, wherein the second support member comprises a protrusion part inserted into the hole of the first support member, wherein the first support member comprises a first hook extended from the side wall of the first support member and contacting upper surface of the first substrate and a second hook extended from the side wall of the first support member and contacting lower surface of the second substrate, wherein the second support member comprises a third hook extended from a side wall of the second support member and contacting lower surface of the third substrate, wherein the first support member comprises a connection part connecting two adjacent side walls of the first support member, wherein a groove being inwardly recessed is formed at a connection part of the side wall of the first support member and the connection part, wherein the second support member comprises a connection part connecting two adjacent side walls of the second support member, wherein at least one of the side walls of the second support member comprises a first locking part being bent inward and in contact with lower surface of the second substrate, and a second locking part being bent inward and in contact with upper surface of the third substrate, wherein at least one of the connection parts comprises a third locking part being bent inward and in contact with lower surface of the second substrate, characterized in that the second support member comprises an inclined part extended from the side wall of the second support member and formed in an outward direction, and wherein the inclined part of the second support member is caught by a boss formed by being protruded from the first body.

### [Advantageous Effects]

Through the present embodiment, the reduction of a component mounting space can be minimized despite the stacked structure of multiple substrates. In particular, compared to a screw-based coupling structure, a wider space for component mounting can be secured.

In addition, the process becomes simplified due to the hook fastening structure so that the process time is minimized, thereby enhancing workability and productivity.

In addition, substrate bending that may occur during the coupling process between pluralities of substrates can be prevented.

In addition, it can prevent the substrate from shaking when the camera module vibrates.

### [Brief Description of Drawings]

FIG.1 is a perspective view of a camera module according to an embodiment of the present invention.
FIG. 2 is an exploded perspective view of a camera module according to an embodiment of the present invention.
FIG. 3 is a cross-sectional view of a camera module according to an embodiment of the present invention.
FIG. 4 is an enlarged cross-sectional view of a part of a camera module according to an embodiment of the present invention.
FIG. 5 is an enlarged view of area A shown in FIG. 4.
FIG. 6 is an enlarged cross-sectional view of another part of a camera module according to an embodiment of the present invention.
FIG. 7 is a perspective view of the first support member of a camera module according to an embodiment of the present invention.
FIG. 8 is a perspective view of a second support member of a camera module according to an embodiment of the present invention.
FIG. 9 is a diagram showing a view from the upper side of a first substrate of a camera module according to an embodiment of the present invention.
FIG. 10 is a diagram showing a view from the lower side of a third substrate of a camera module according to an embodiment of the present invention.

### [BEST MODE]

Hereinafter, preferred embodiments of the present invention will be described in detail with reference to the accompanying drawings.

In addition, the terms (including technical and scientific terms) used in the present embodiments, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the present embodiment, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction based on one component may be included.

The 'optical axis direction' used below is defined as the optical axis direction of the lens. Meanwhile, 'optical axis direction' may correspond to such as 'up and down direction', 'z-axis direction', and the like.

Hereinafter, the configuration of a camera module according to an embodiment of the present invention will be described with reference to the drawings.

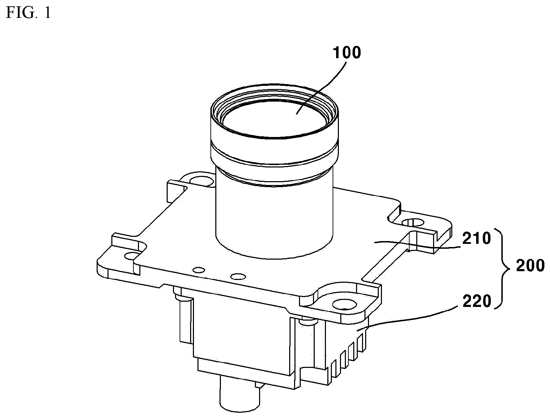

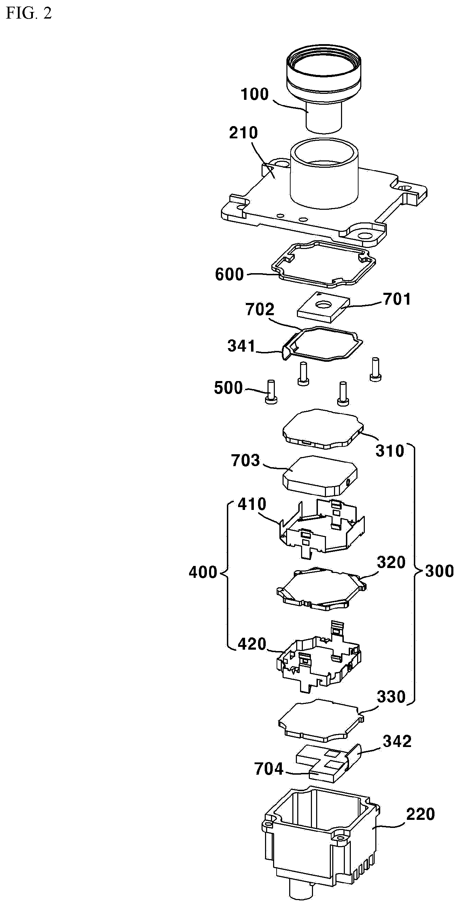

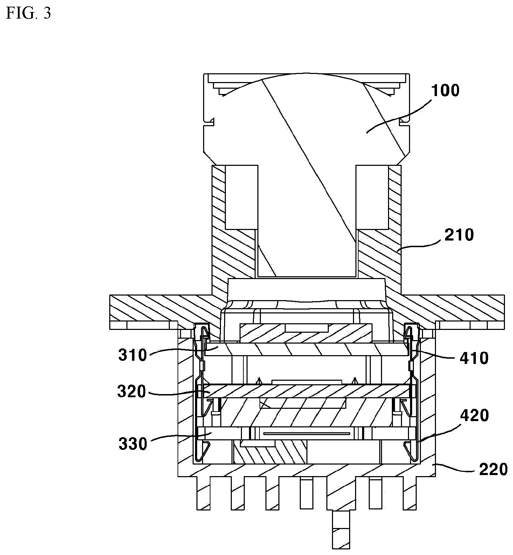

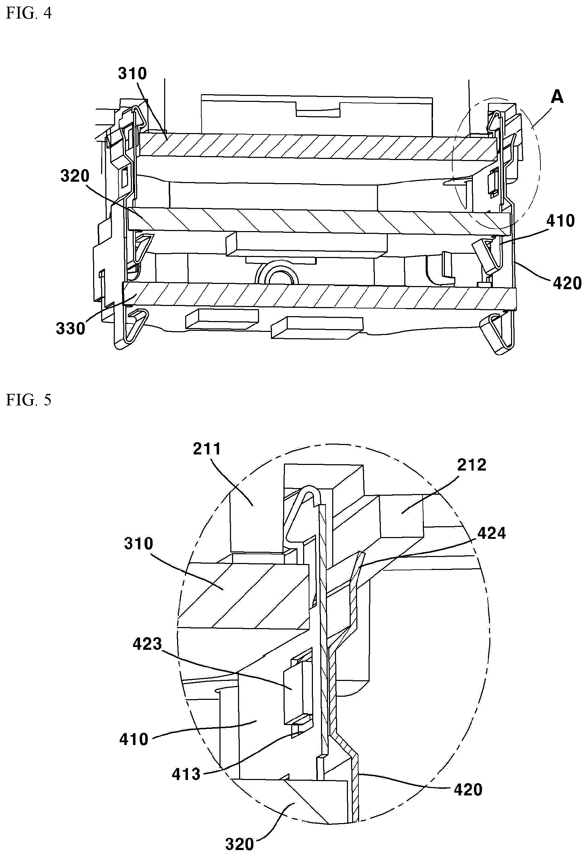

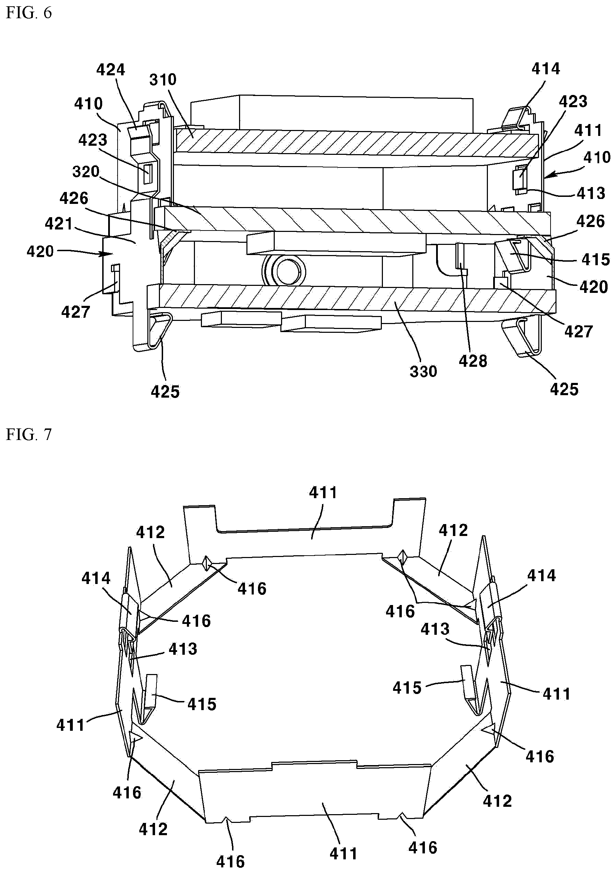

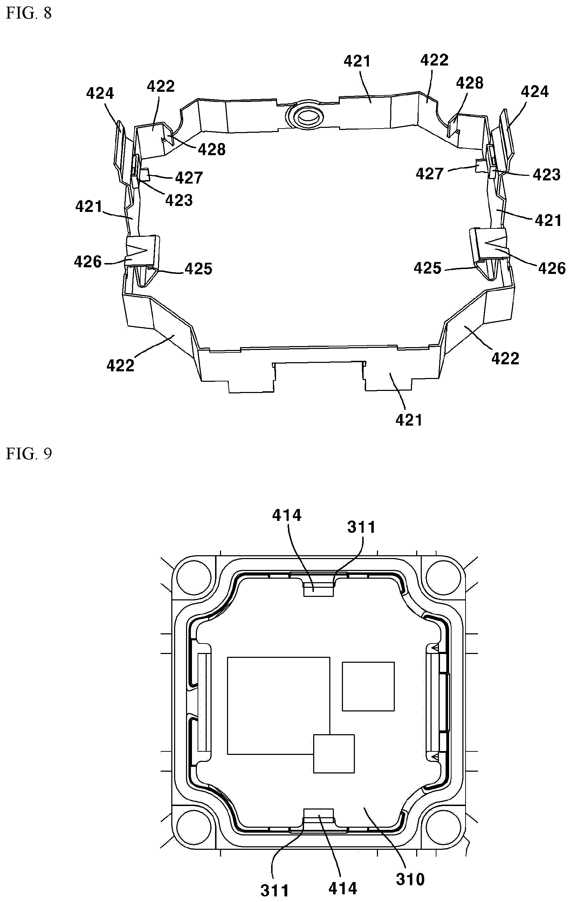

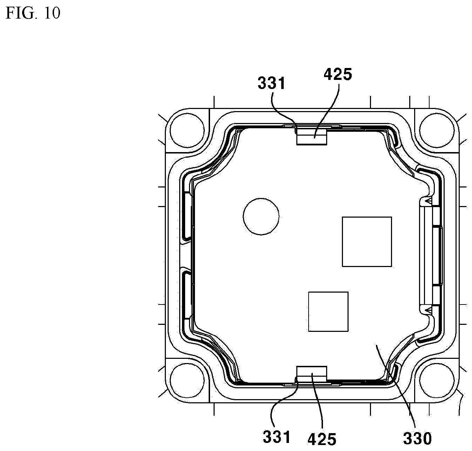

FIG.1 is a perspective view of a camera module according to an embodiment of the present invention; FIG. 2 is an exploded perspective view of a camera module according to an embodiment of the present invention; FIG. 3 is a cross-sectional view of a camera module according to an embodiment of the present invention; FIG. 4 is an enlarged cross-sectional view of a part of a camera module according to an embodiment of the present invention; FIG. 5 is an enlarged view of area A shown in FIG. 4; FIG. 6 is an enlarged cross-sectional view of another part of a camera module according to an embodiment of the present invention; FIG. 7 is a perspective view of the first support member of a camera module according to an embodiment of the present invention; FIG. 8 is a perspective view of a second support member of a camera module according to an embodiment of the present invention; FIG. 9 is a diagram showing a view from the upper side of a first substrate of a camera module according to an embodiment of the present invention; and FIG. 10 is a diagram showing a view from the lower side of a third substrate of a camera module according to an embodiment of the present invention.

The camera module according to an embodiment of the present invention may be a vehicle camera module. The camera module may be coupled to the vehicle. The camera module may be used in at least one among a vehicle front camera, a side camera, a rear camera, an in-vehicle driver surveillance camera, and a black box. The camera module may be disposed at the front of the vehicle. The camera module may be disposed at the rear of the vehicle. The camera module may be disposed on the side of the vehicle. A vehicle may include a vehicle body in which a driver rides, a door being mounted on the car body, and a display unit being disposed inside the vehicle body. The camera module may be disposed in at least one of the vehicle body and the door. The camera module may be electrically connected to the display unit.

A camera module according to an embodiment of the present invention includes a body part **200,** a plurality of substrates **300,** and a support member **400.** The body part **200** includes a first body **210** and a second body **220.**

A lens is disposed in the first body **210.**

More specifically, the first body **210** may be referred to as any one among a front housing, a front body, an upper housing, and a first housing. The first body **210** includes a lens. The first body **210** may include a lens barrel. A lens barrel may be disposed on one side of the opening of the first body **210.** The lens barrel can accommodate a lens inside. A lens may be disposed in the hole of the lens barrel. The inner surface of the hole of the lens barrel may be formed in a size and shape corresponding to the outer circumferential shape of the lens. The lens barrel and lens may be formed integrally. The first body **210,** the lens barrel, and the lens may be formed as one body. The first body **210,** the lens barrel, and the lens may be formed separately. The lens may include a plurality of lenses. The lens may be aligned with an image sensor **701.** The lens may be optically aligned with the image sensor **701.** The optical axis of the lens may coincide with the optical axis of the image sensor **701.** The first body **210** may include an infrared filter (IR filter) being disposed between the lens and the image sensor **701.**

The second body **220** may be coupled to a lower side of the first body **210.**

More specifically, the second body **220** may be referred to as any one among a rear housing, a rear body, a lower housing, and a second housing. The second body **220** may be formed in a square shape with an open upper part. The second body **220** may be formed of a metal material. The second body **220** may be disposed below the first body **210.** The second body **220** is coupled with the first body **210.** The second body **220** may form an internal space through the coupling with the first body **210.** The second body **220** may include a space part whose upper surface is open.

The lower surface of the first body **210** may include a first boss part **211** being in contact with one surface of the first substrate **310.** An adhesive member **702** may be disposed between one surface of the first substrate **310** and the first boss part **211.** The adhesive member **702** may be formed in a strip shape corresponding to the shape of the edge of one surface of the first substrate **310.** The lower surface of the first body **210** may include a second boss part **212** being in contact with the second body **220.** The lower surface of the first body **210** may include: a concave part between the first boss part **211** being in contact with one surface of the first substrate **310;** and the second boss part **212** being in contact with the second body **220.** The concave part may be a space being formed by the first boss part **211** and the second boss part **212** being protruded from a lower surface of the first body **210.**

A sealing member **600** may be disposed between the first body **210** and the second body **220.** A sealing member **600** may be disposed in a space formed by the first boss part **211** and the second boss part **212.** Foreign substances can be prevented from entering the internal space of the first body **210** and the second body **220** through the sealing member **600.**

The first body **210** and the second body **220** may be coupled through a screw **500.** The second body **220** may have a hole where the screw **500** is coupled to the square corner. The first body **210** and the second body **220** may be coupled with an adhesive. The first body **210** and the second body **220** may be coupled with an epoxy.

The second body **220** may include a connector lead-out part on the bottom surface. The connector lead-out part may be coupled to the bottom surface. The connector lead-out part may be disposed in a hole (not shown) in the bottom surface. The connector lead-out part may penetrate a hole in the bottom surface. A connector may be disposed inside the connector lead-out part. The connector lead-out part may be formed of a metal material.

A plurality of substrates **300** are disposed between the first body **210** and the second body **220.**

More specifically, the plurality of substrates **300** may be printed circuit substrates (PCBs). Electronic components may be mounted on at least one of the upper surface and the lower surface of each of the plurality of substrates **300.** The plurality of substrates **300** may be rigid substrates. The plurality of substrates **300** may be disposed so that the upper surface and the lower surface face each other.

The plurality of substrates **300** include first to third substrates **310**, **320**, and **330** sequentially disposed adjacent to the first body **210.** The first substrate **310** is a substrate being disposed closest to the lens, and an image sensor **701** may be mounted on an upper surface of the first substrate **310.** A first heat dissipation member **703** may be disposed on a lower surface of the first substrate **310.** The first heat dissipation member **703** may allow heat being generated from the image sensor **701** to be discharged. The first heat dissipation member **703** may be disposed on a lower surface of the second substrate **320.** The third substrate **330** is a substrate being disposed closest to the bottom surface of the second body **220,** a second heat dissipation member **704** may be disposed on the bottom surface of the third substrate **330,** and a connector may be coupled thereto. The plurality of substrates **300** may be electrically connected to a connector. This is merely an example, and various electronic components may be mounted on at least one of one side and the other side of the first to third substrates **310, 320,** and **330.** The third substrate **330** may be disposed to be spaced apart from the bottom surface of the second body **220.** At least some of the side surfaces among the plurality of substrates **300** may be in contact with an inner surface of the second body **220.** The plurality of substrates **300** may include additional substrates in addition to the first to third substrates **310, 320,** and **330.**

The plurality of substrates **300** may be electrically connected to each other by flexible substrates being connected to side surfaces. Referring to FIG. 2, the first flexible substrate **341** is fixed to one end of the adhesive member **702,** so that the first substrate **310** and the second substrate **320** can be electrically connected to each other. The second flexible substrate **342** is fixed to the second heat dissipation member **704,** so that the second substrate **320** and the third substrate **330** can be electrically connected to each other. This is only an example, the first flexible substrate **341** may be connected to the side surface of the first substrate **310** and the side surface of the second substrate **320;** and the second flexible substrate **342** may be connected to the side surface of the second substrate **320** and the side surface of the third substrate **330.** With respect to the side surface of the second substrate **320,** the first flexible substrate **341** and the second flexible substrate **342** may be disposed on opposite sides of each other to avoid mutual interference.

It includes a support member **400** that fixes the plurality of substrates **300** so as to be spaced apart from one another in an optical axis direction.

More specifically, the support member **400** includes a first support member **410** and a second support member **420.** The first support member **410** and the second support member **420** may be formed in different shapes. The first support member **410** fixes the first substrate **310** and the second substrate **320** by spacing them apart from each other in an optical axis direction. The second support member **420** fixes the second substrate **320** and the third substrate **330** by spacing them apart from each other in an optical axis direction. The first support member **410** may be disposed more inside than the second support member **420.** The second support member **420** may be disposed to surround the outside of at least a part of the first support member **410.** The first support member **410** and the second support member **420** may be disposed such that parts are overlapped with each other in a direction perpendicular to the optical axis. A part of the first support member **410** and the second support member **420** may be disposed to be spaced apart in a direction perpendicular to the optical axis.

Hereinafter, the first support member **410** will be described with reference to FIG. 7. The first support member **410** includes a plurality of side walls **411.** The plurality of side walls **411** may include a first side wall and a second side wall being disposed to face each other, and a third side wall and a fourth side wall being disposed to face each other and connecting the first side wall and the second side wall. Holes **413** are formed on side walls of the first support members **410** facing each other. The first side wall and the second side wall of the first support member **410** being disposed to face each other may have holes **413** formed at positions facing each other.

The holes **413** being formed in the plurality of side walls **411** may be formed in a square shape. The hole **413** of the first support member **410** may be formed in a circular shape. The hole **413** of the first support member **410** may be formed into various shapes. A protrusion part **423** being formed in the second support member **420** is inserted into the hole **413** of the first support member **410.** The hole **413** of the first support member **410** may be formed in a shape corresponding to the protrusion part **423** of the second support member **420.** In the hole **413** of the first support member **410,** the protrusion part **423** being formed in the second support member **420** may be inserted to couple the first support member **410** and the second support member **420,** and can be fixed while controlling relative movement in the up/down/left/right directions.

The first support member **410** includes a first hook **414** being extended upward from the side wall **411** and in contact with an upper surface of the first substrate **310**. The first hook **414** is formed in each of the plurality of side walls **411** facing each other. The first hook **414** may be formed in all four side walls **411.** The first hook **414** is extended upward from the side wall **411** and is bent inward to form a downwardly inclined surface, and after bending from the end of the downwardly inclined surface toward the inner surface of the side wall, a surface parallel to the side wall may be formed. One end of the first hook **414** is disposed to be in contact with one surface of the first substrate **310.** A part of the first hook **414** may be disposed so as to be in contact with an outer surface of the first boss part **211** of the first body **210.** At this time, the first hook **414** contains a material with elastic force and presses the outer surface of the first boss part **211** so that the first support member **410** can be coupled to the first body **210.**

The lower surface of the first body **210** may include a concave part between the first boss part **211** being in contact with one surface of the first substrate **310** and the second boss part **212** being in contact with the second body **220.** The concave part may be a space being formed by the first boss part **211** and the second boss part **212** being protruded from the lower surface of the first body **210.** The first hook **414** of the first support member **410** may be disposed in the concave part of the first body **210.** A part of the inclined surface of the first hook **414** may be in contact with an outer surface of the first boss part **211** of the first body **210.** The first hook **414** of the first support member **410** is disposed in a concave part formed in the first body **210** to minimize bending deformation of the first support member **410.**

The first support member **410** includes a second hook **415** being extended downward from the side wall **411** and in contact with the lower surface of the second substrate **320.** The second hook **415** is formed in each of the plurality of side walls **411** facing each other. The second hook **415** may be formed in each of the four side walls **411.** The second hook **415** is extended downward from the side wall **411** and is bent inward to form an upwardly inclined surface, and a curved surface may be formed from the upwardly inclined surface toward the inner surface of the side wall. One end of the second hook **415** has a surface parallel to the second substrate **320** and is in contact with the second substrate **320.** The surface of the second hook **415** parallel to the second substrate **320** may be in contact with the second substrate **320** to fix the second substrate **320.**

The first hook **414** and the second hook **415** of the first support member **410** may be formed by being extended from the same side wall. The first hook **414** and the second hook **415** of the first support member **410** may be formed by being extend from different side walls. For example, the first hook **414** of the first support member **410** may be formed by being extended from the first and second side walls facing each other, respectively. Or, the first support member **410** may be formed by being extended from the first and second side walls facing each other, respectively, and the second hook **415** may be formed by being extended from the third and fourth side walls facing each other.

The first support member **410** includes a connection part **412** where adjacent side walls **411** are connected to each other. The connection part **412** may connect the first side wall and the third side wall. The connection part **412** may connect the first side wall and the fourth side wall. The connection part **412** may connect the second side wall and the third side wall. The connection part **412** may connect the second side wall and the fourth side wall. The connection part **412** may be formed as a surface perpendicular to the plurality of side walls **411.** The connection part **412** may be formed to be parallel to the substrate **300.** The lower surface of the connection part **412** may be in contact with the upper surface of the second substrate **320.** The second substrate **320** may be disposed and fixed between the lower surface of the connection part **412** and one surface of the second hook **415.**

A groove **416** being inwardly recessed is formed at the connection part of the connection part **412** and each side wall **411.** The groove **416** may be disposed to increase the rigidity of the part where the connection part **412** and the side wall **411** are connected. The groove **416** may be formed into two triangular shapes facing each other. The groove **416** may be formed in a shape in which inclined surfaces being inwardly recessed face each other. The groove **416** may be a shape by bending a part of the surface where the connection part **412** and the side wall **411** meet.

Hereinafter, the second support member **420** will be described with reference to FIG. 8. The second support member **420** includes a plurality of side walls **421.** The plurality of side walls **421** may include: a first side wall and a second side wall being disposed to face each other; and a third side wall and a fourth side wall connecting the first side wall and the second side wall and being disposed to face each other. A protrusion part **423** is formed in the side wall **421** of the second support member **420.** A protrusion part **423** may be formed in each of the side walls **421** of the second support member **420** facing each other. Each of the first side wall and second side wall being disposed to face each other of the second support member **420** may have protrusion parts formed at a position where they are facing each other. The surface on which the protrusion part **423** is formed may be disposed between the first substrate **310** and the second substrate **320.** The surface on which the protrusion part **423** is formed may be disposed more inside than the side wall **421** of the second support member **420.**

The protrusion part **423** being formed in at least one among the plurality of side walls **421** may be protruded in a shape corresponding to the hole **413** being formed in the first support member **410.** The protrusion part **423** of the second support member **420** may be formed to be protruded into a square shape. The protrusion part **423** of the second support member **420** may be formed to be protruded in a circular shape. The protrusion part **423** of the second support member **420** may be formed into various shapes. The protrusion part **423** of the second support member **420** is inserted into the hole **413** of the first support member **410.** The protrusion part **423** of the second support member **420** may be inserted into and fixed to the hole **413** of the first support member **410.** The protrusion part **423** of the second support member **420** is inserted into the hole **413** of the first support member **410** to prevent movement of the second support member **420.**

An inclined surface inclined in an inward direction may be formed between the surface on which the protrusion part **423** is formed and the side wall of the second support member **420.** An inclined part **424** being extended upward from the surface on which the protrusion part **423** is formed is formed. The inclined part **424** is formed in an outward direction from the surface on which the protrusion part **423** is formed. The inclined part **424** may comprise: a first surface being extended from the surface on which the protrusion part **423** is formed to form an inclined surface in an outward direction; a second surface being extended upward from the first surface and formed on an imaginary line penetrating the side wall **421**; and a third surface being extended from the second surface to form an inclined surface in an outward direction.

One end of the inclined part **424** is in contact with the inner surface of the second boss part **212** of the first body **210.** One end of the inclined part **424** is in contact with the second boss part **212** of the first body **210,** thereby preventing the second support member **420** from being bent outward. In addition, the second support member **420** contains an elastic material and can be fixed by pressing the second boss part **212** outward.

The second support member **420** includes a third hook **425** being extended downward from the side wall **421** and in contact with a lower surface of the third substrate **330.** The third hook **425** is formed in each of the plurality of side walls **421** facing each other. The third hook **425** may be formed on each of the four side walls **421.** The third hook **425** is extended downward from the side wall **421** and is bent inward to form an upwardly inclined surface, and a curved surface may be formed from the upwardly inclined surface toward the inner surface of the side wall. One end of the third hook **425** has a surface parallel to the third substrate **330** and can be in contact with a lower surface of the third substrate **330.** The surface of the third hook **425** parallel to the third substrate **330** may be in contact with the third substrate **330** to fix the third substrate **330.** The third hook **425** may have the same shape as the first hook **414** or the second hook **415.** The third hook **425** may have a different shape from the first hook **414** and the second hook **415.**

The second support member **420** includes a connecting part **422** through which adjacent side walls **421** are connected to each other. The connection part **422** may connect the first side wall and the third side wall. The connection part **422** may connect the first side wall and the fourth side wall. The connection part **422** may connect the second side wall and the third side wall. The connection part **422** may connect the second side wall and the fourth side wall. The connection part **422** of the second support member **420** may have a different shape from the connection part **412** of the first support member **410** and may be formed in a plane perpendicular to the substrate **300.** The connection part **422** of the second support member **420** may include a plurality of surfaces connecting adjacent side walls at various angles. For example, the connection part **422** of the second support member **420** may be formed by connecting a surface perpendicular to the side wall **421** and a surface forming an obtuse angle with the side wall. Or, the connection part **422** of the second support member **420** may be formed as a curved surface that is recessed inward.

The second support member **420** includes a locking part **426, 427, 428** being bent inward in at least one side wall **421** and in contact with an upper surface or a lower surface of at least one among the plurality of substrates **300.**

More specifically, the second support member **420** includes a first locking part **426** in at least one side wall **421** being bent inward and in contact with one surface of the second substrate **320.** The first locking part **426** is in contact with a lower surface of the second substrate **320** to prevent movement of the second substrate **320.** The first locking part **426** may be formed at the upper end of the side wall **421** of the second support member **420** with a surface perpendicular to the side wall **421.** The first locking part **426** may be formed to be parallel to a lower surface of the second substrate **320.** The first locking part **426** may have at least one groove being recessed inwardly formed at a part connected to the side wall **421** to reinforce rigidity. The groove may be formed in the shape of two triangular shapes facing each other. The groove may be formed in a shape where inclined surfaces being recessed inward and facing each other.

The second support member **420** includes a second locking part **427** being bent inward in at least one side wall **421** and in contact with one surface of the third substrate **330.** The second locking part **427** is in contact with an upper surface of the third substrate **330** to prevent movement of the third substrate **330.** The second locking part **427** may be formed by cutting at least a part of the side wall **421** of the second support member **420** and bending it inward. The second locking part **427** may be formed as a surface perpendicular to the side wall **421** of the second support member **420.** The second locking part **427** may be disposed perpendicular to an upper surface of the third substrate **330.**

At least one connection part **422** of the second support member **420** includes a third locking part **428** being bent inward and in contact with the other surface of the second substrate **320.** The third locking part **428** is in contact with a lower surface of the second substrate **320** to prevent movement of the second substrate **320.** The third locking part **428** may be formed by cutting and bending at least a part of one surface of the connecting part **422** of the second support member **420.** The third locking part **428** may be disposed perpendicular to a lower surface of the second substrate **320.**

The first to third substrates **310, 320,** and **330** may be fixed and spaced apart in an optical axis direction by a structure in which the first support member **410** and the second support member **420** are coupled. The first substrate **310** may be coupled to and fixed to the first boss part **211** of the first body **210.** The second substrate **320** can be fixed by being contact with a connection part **412** of the first support member **410,** a second hook **415** of the first support member **410,** an upper end of the side wall **421** of the second support member **420,** a first locking part **426,** and a third locking part **428.** The third substrate **330** may be fixed by being in contact with a lower end of the side wall **421** of the second support member **420,** a third hook **425,** and a second locking part **427.**

The first substrate **310** may be inserted by pressing downward from the upper side of the first support member **410.** The second substrate **320** may be inserted by pressing upward from the lower side of the first support member **410.** The second substrate **320** may be inserted by pressing downward from the upper side of the second support member **420.** The third substrate **330** may be inserted by pressing downward from the lower side of the second support member **420.**

The plurality of substrates **300** may all be formed to have the same shape and size. The plurality of substrates **300** may be formed in different shapes and sizes. The following description of the shape of the substrate may be a description of each of the first to third substrates **310**, **320**, and **330**.

The substrate **300** may include an avoidance part in which four corner side surfaces are rounded and recessed inward. The avoidance part may be formed to avoid a part where the first body **210** and the second body **220** are screw-coupled. The substrate **300** may include: a first side surface and a second side surface being disposed at a side opposite to each other; and a third side surface and fourth side surface connecting the first side surface and second side surface and being disposed at a side opposite to each other.

A concave part being in contact with the inner surface of the hook formed in the support member **400** may be formed on the first side surface and the second side surface of the substrate **300.** Referring to FIG. 9, a concave part **311** may be formed on the first side surface and the second side surface of the first substrate **310.** The first hook **414** of the first support member **410** may be disposed to pass through the concave part **311** formed in the first substrate **310.** Referring to FIG. 10, a concave part **331** may be formed on the first side surface and the second side surface of the third substrate **330.** The third hook **425** of the second support member **420** may be disposed to pass through the concave part **331** formed in the third substrate **330.** Although not shown, a concave part (not shown) may be formed on the first side surface and the second side surface of the second substrate **320.** The second hook **415** of the first support member **410** may be disposed to pass through the concave part of the second substrate **320.**

A rib may be formed on the third surface and the fourth side surface of the substrate **300.** A protrusion may be formed on both side surfaces of the rib. A flexible substrate **340** may be connected to a rib of different substrate. The rib of the substrate **300** may form a space so that the flexible substrate **340** being connected to the rib can be disposed inside the second body **220.**

Although embodiments of the present invention have been described above with reference to the attached drawings, those skilled in the art will understand that the present invention can be implemented in other specific forms within the scope of the claims. Therefore, the embodiments described above should be understood in all respects as illustrative and not restrictive.

## Claims

1. A camera module comprising:
a first body (210) comprising a lens;
a second body (220) coupled to the first body (210);
first to third substrates (310, 320, 330) disposed between the first body (210) and the second body; and
a first support member (410) and a second support member (420) for spacing the first to third substrates (310, 320, 330) in an optical axis direction,
wherein the first support member (410) comprises a hole (413) formed in a side wall (411) thereof,
wherein the second support member (420) comprises a protrusion part (423) inserted into the hole (413) of the first support member (410),
wherein the first support member (410) comprises a first hook (414) extended from the side wall (411) of the first support member (410) and contacting the upper surface of the first substrate (310) and a second hook (415) extended from the side wall (411) of the first support member (410) and contacting the lower surface of the second substrate (320),
wherein the second support member (420) comprises a third hook (425) extended from a side wall (421) of the second support member (420) and contacting the lower surface of the third substrate (330),
wherein the first support member (410) comprises a connection part (412) connecting two adjacent side walls (411) of the first support member (410),
wherein a groove (416) being inwardly recessed is formed at a connection part (412) of the side wall (411) of the first support member (410) and the connection part (412),
wherein the second support member (420) comprises connection parts (422) each connecting two adjacent side walls (421) of the second support member (420)
wherein at least one of the side walls (421) of the second support member (420) comprises a first locking part (426) being bent inward and in contact with the lower surface of the second substrate (320), and a second locking part (427) being bent inward and in contact with the upper surface of the third substrate (330),
wherein at least one of the connection parts (422) comprises a third locking part (428) being bent inward and in contact with the lower surface of the second substrate (320),
**characterized in that** the second support member (420) comprises an inclined part (424) extended from the side wall (421) of the second support member (420) and formed in an outward direction, and
wherein the inclined part (424) of the second support member (420) is caught by a boss (212) formed by being protruded from the first body (210).

2. The camera module according to claim 1, wherein the first hook (414) is extended upward from the side wall (411) of the first support member (410) and is bent inward to form a downwardly inclined surface, and after bending from the end of the downwardly inclined surface toward the inner surface of the side wall, a surface parallel to the side wall is formed.

3. The camera module of any one of claims 1 or 2, wherein the second hook (415) is extended downward from the side wall (411) of the first support member (410) and is bent inward to form an upwardly inclined surface, and
wherein one end of the second hook (415) comprises a surface parallel to the lower surface of the second substrate (320) and is in contact with the lower surface of the second substrate (320).

4. The camera module of any one of claims 1 to 3, wherein at least one among the first to third substrates (310, 320, 330) comprises a concave part inwardly recessed on a side surface, and
wherein at least one of the first support member (410) and the second support member (420) contacts the concave part to prevent the substrate from being separated.

5. The camera module of any one of claims 1 to 4, comprising an image sensor (701) mounted on an upper surface of the first substrate (310).

6. The camera module of any one of claims 1 to 5, wherein the connection part (422) of the second support member (420) is formed by connecting a surface perpendicular to the side wall (421) and a surface forming an obtuse angle with the side wall.

7. The camera module of any one of claims 1 to 6, wherein the first substrate (310) is inserted by pressing downward from an upper side of the first support member (410).

8. The camera module of any one of claims 1 to 7, wherein the second substrate (320) is inserted by pressing upward from a lower side of the first support member (410).

## Patentansprüche

1. Kameramodul, umfassend:
einen ersten Körper (210), der eine Linse umfasst;
einen zweiten Körper (220), der mit dem ersten Körper (210) gekoppelt ist;
erste bis dritte Substrate (310, 320, 330), die zwischen dem ersten Körper (210) und dem zweiten Körper angeordnet sind; und
ein erstes Stützelement (410) und ein zweites Stützelement (420) zum Beabstanden der ersten bis dritten Substrate (310, 320, 330) in Richtung einer optischen Achse,
wobei das erste Stützelement (410) ein in einer Seitenwand (411) desselben ausgebildetes Loch (413) umfasst,
wobei das zweite Stützelement (420) ein Vorsprungsteil (423) umfasst, das in das Loch (413) des ersten Stützelements (410) eingeführt ist,
wobei das erste Stützelement (410) einen ersten Haken (414), der sich von der Seitenwand (411) des ersten Stützelements (410) erstreckt und die obere Oberfläche des ersten Substrats (310) kontaktiert, und einen zweiten Haken (415) umfasst, der sich von der Seitenwand (411) des ersten Stützelements (410) erstreckt und die untere Oberfläche des zweiten Substrats (320) kontaktiert,
wobei das zweite Stützelement (420) einen dritten Haken (425) umfasst, der sich von einer Seitenwand (421) des zweiten Stützelements (420) erstreckt und die untere Oberfläche des dritten Substrats (330) kontaktiert,
wobei das erste Stützelement (410) ein Verbindungsteil (412) umfasst, das zwei angrenzende Seitenwände (411) des ersten Stützelements (410) verbindet,
wobei eine nach innen vertiefte Nut (416) an einem Verbindungsteil (412) der Seitenwand (411) des ersten Stützelements (410) und dem Verbindungsteil (412) ausgebildet ist,
wobei das zweite Stützelement (420) Verbindungsteile (422) umfasst, von denen jedes zwei angrenzende Seitenwände (421) des zweiten Stützelements (420) verbindet,
wobei wenigstens eine der Seitenwände (421) des zweiten Stützelements (420) ein erstes Verriegelungsteil (426), das nach innen gebogen ist und mit der unteren Oberfläche des zweiten Substrats (320) in Kontakt steht, und ein zweites Verriegelungsteil (427) umfasst, das nach innen gebogen ist und mit der oberen Oberfläche des dritten Substrats (330) in Kontakt steht,
wobei wenigstens eines der Verbindungsteile (422) ein drittes Verriegelungsteil (428) umfasst, das nach innen gebogen ist und mit der unteren Oberfläche des zweiten Substrats (320) in Kontakt steht,
**dadurch gekennzeichnet, dass** das zweite Stützelement (420) ein geneigtes Teil (424) umfasst, das sich von der Seitenwand (421) des zweiten Stützelements (420) erstreckt und in eine äußere Richtung ausgebildet ist, und
wobei der geneigte Abschnitt (424) des zweiten Stützelements (420) von einem Vorsprung (212) gehalten ist, der durch Hervorstehen von dem ersten Körper (210) ausgebildet ist.

2. Kameramodul nach Anspruch 1, wobei sich der erste Haken (414) von der Seitenwand (411) des ersten Stützelements (410) nach oben erstreckt und nach innen gebogen ist, um eine nach unten geneigte Oberfläche zu bilden, und nach dem Biegen vom Ende der nach unten geneigten Oberfläche in Richtung der inneren Oberfläche der Seitenwand eine zu der Seitenwand parallele Oberfläche gebildet wird.

3. Kameramodul nach einem der Ansprüche 1 oder 2, wobei sich der zweite Haken (415) von der Seitenwand (411) des ersten Stützelements (410) nach unten erstreckt und nach innen gebogen ist, um eine nach oben geneigte Oberfläche zu bilden, und
wobei ein Ende des zweiten Hakens (415) eine zu der unteren Oberfläche des zweiten Substrats (320) parallele Oberfläche umfasst und mit der unteren Oberfläche des zweiten Substrats (320) in Kontakt steht.

4. Kameramodul nach einem der Ansprüche 1 bis 3, wobei wenigstens eines von den ersten bis dritten Substraten (310, 320, 330) einen konkaven Teil umfasst, der an einer Seitenoberfläche nach innen vertieft ist, und
wobei wenigstens eines von dem ersten Stützelement (410) und dem zweiten Stützelement (420) den konkaven Teil kontaktiert, um ein Lösen des Substrats zu verhindern.

5. Kameramodul nach einem der Ansprüche 1 bis 4, umfassend einen Bildsensor (701), der an einer oberen Oberfläche des ersten Substrats (310) angebracht ist.

6. Kameramodul nach einem der Ansprüche 1 bis 5, wobei das Verbindungsteil (422) des zweiten Stützelements (420) durch Verbinden einer Oberfläche, die zu der Seitenwand (421) senkrecht ist, mit einer Oberfläche, die mit der Seitenwand einen stumpfen Winkel bildet, gebildet wird.

7. Kameramodul nach einem der Ansprüche 1 bis 6, wobei das erste Substrat (310) durch nach unten Drücken von einer Oberseite des ersten Stützelements (410) eingeführt wird.

8. Kameramodul nach einem der Ansprüche 1 bis 7, wobei das zweite Substrat (320) durch nach oben Drücken von einer Unterseite des ersten Stützelements (410) eingeführt wird.

## Revendications

1. Un module de caméra comprenant :
un premier corps (210) comprenant une lentille ;
un second corps (220) couplé au premier corps (210) ;
des premier à troisième substrats (310, 320, 330) disposés entre le premier corps (210) et le second corps ; et
un premier élément de support (410) et un second élément de support (420) destinés à espacer les premier à troisième substrats (310, 320, 330) dans une direction d'axe optique,
dans lequel le premier élément de support (410) comprend un trou (413) formé dans une paroi latérale (411) de celui-ci,
dans lequel le second élément de support (420) comprend une partie de saillie (423) insérée dans le trou (413) du premier élément de support (410),
dans lequel le premier élément de support (410) comprend un premier crochet (414) s'étendant depuis la paroi latérale (411) du premier élément de support (410) et en contact avec la surface supérieure du premier substrat (310) et un deuxième crochet (415) s'étendant depuis la paroi latérale (411) du premier élément de support (410) et en contact avec la surface inférieure du deuxième substrat (320),
dans lequel le second élément de support (420) comprend un troisième crochet (425) s'étendant depuis une paroi latérale (421) du second élément de support (420) et en contact avec la surface inférieure du troisième substrat (330),
dans lequel le premier élément de support (410) comprend une partie de connexion (412) reliant deux parois latérales (411) adjacentes du premier élément de support (410),
dans lequel une rainure (416) évidée vers l'intérieur est formée au niveau d'une partie de connexion (412) de la paroi latérale (411) du premier élément de support (410) et de la partie de connexion (412),
dans lequel le second élément de support (420) comprend des parties de connexion (422) reliant chacune deux parois latérales (421) adjacentes du second élément de support (420)
dans lequel au moins l'une des parois latérales (421) du second élément de support (420) comprend une première partie de verrouillage (426) repliée vers l'intérieur et en contact avec la surface inférieure du deuxième substrat (320), et une deuxième partie de verrouillage (427) repliée vers l'intérieur et en contact avec la surface supérieure du troisième substrat (330),
dans lequel au moins l'une des parties de connexion (422) comprend une troisième partie de verrouillage (428) repliée vers l'intérieur et en contact avec la surface inférieure du deuxième substrat (320)
**caractérisé en ce que** le second élément de support (420) comprend une partie inclinée (424) s'étendant depuis la paroi latérale (421) du second élément de support (420) et formée dans une direction vers l'extérieur, et
dans lequel la partie inclinée (424) du second élément de support (420) est retenue par un bossage (212) formé en faisant saillie depuis le premier corps (210).

2. Le module de caméra selon la revendication 1, dans lequel le premier crochet (414) s'étend vers le haut depuis la paroi latérale (411) du premier élément de support (410) et est replié vers l'intérieur pour former une surface inclinée vers le bas, et après le pliage depuis l'extrémité de la surface inclinée vers le bas en direction de la surface interne de la paroi latérale, une surface parallèle à la paroi latérale est formée.

3. Le module de caméra selon l'une quelconque des revendications 1 ou 2, dans lequel le second crochet (415) s'étend vers le bas depuis la paroi latérale (411) du premier élément de support (410) et est replié vers l'intérieur pour former une surface inclinée vers le haut, et
dans lequel une extrémité du second crochet (415) comprend une surface parallèle à la surface inférieure du deuxième substrat (320) et est en contact avec la surface inférieure du deuxième substrat (320).

4. Le module de caméra selon l'une quelconque des revendications 1 à 3, dans lequel au moins un parmi les premier à troisième substrats (310, 320, 330) comprend une partie concave en retrait vers l'intérieur sur une surface latérale, et
dans lequel au moins l'un du premier élément de support (410) et du second élément de support (420) est en contact avec la partie concave afin d'empêcher le substrat de se séparer.

5. Le module de caméra selon l'une quelconque des revendications 1 à 4, comprenant un capteur d'image (701) monté sur une surface supérieure du premier substrat (310).

6. Le module de caméra selon l'une quelconque des revendications 1 à 5, dans lequel la partie de connexion (422) du second élément de support (420) est formée en reliant une surface perpendiculaire à la paroi latérale (421) et une surface formant un angle obtus avec la paroi latérale.

7. Le module de caméra selon l'une quelconque des revendications 1 à 6, dans lequel le premier substrat (310) est inséré en appuyant vers le bas depuis un côté supérieur du premier élément de support (410).

8. Le module de caméra selon l'une quelconque des revendications 1 à 7, dans lequel le deuxième substrat (320) est inséré par pression vers le haut depuis un côté inférieur du premier élément de support (410).
